# EUROPÄISCHE PATENTSCHRIFT

(11) **EP 4 377 037 B1**
(45) Veröffentlichungstag und Bekanntmachung des Hinweises auf die Patenterteilung: **22.10.2025**
(21) Anmeldenummer: 22755092.8
(22) Anmeldetag: 20.07.2022
(51) Int. Cl.: B23C 5/10

(54) **FRÄSWERKZEUG**
MILLING TOOL
OUTIL DE FRAISAGE

(30) Priorität: 26.07.2021 DE 102021119229
(43) Veröffentlichungstag der Anmeldung: 05.06.2024
(73) Patentinhaber: Audi AG, 85045 Ingolstadt (DE); Audi Hungaria ZRT, 9027 Gyõr (HU)
(72) Erfinder: KOPTON, Peter, 85092 Kösching (DE); BUGÁR, Attila, 9081 Gyorujbarat (HU)
(74) Vertreter: Bierschneider, Walter
(86) Internationale Anmeldenummer: PCT/EP2022/070372
(87) Internationale Veröffentlichungsnummer: WO 2023/006549

(56) Entgegenhaltungen:
- EP-A1- 2 965 846
- DE-B4- 112017 000 520
- US-A1- 2010 272 526
- US-A1- 2019 118 272

## Beschreibung

Die Erfindung betrifft ein Fräswerkzeug nach dem Oberbegriff des Anspruches 1 sowie eine Prozessanordnung bestehend aus dem Fräswerkzeug und einem Werkstück. Ein solches Fräswerkzeug ist beispielsweise aus der EP 2 965 846 A1 bekannt.

Mit einem gattungsgemäßen Fräswerkzeug wird speziell eine Werkstückschulter in einer Werkstückoberfläche hergestellt. Die Werkstückschulter weist einen Werkstückboden auf, der an einer Innenecke in eine davon hochgezogene Schulterfläche übergeht. Im fertig fräsbearbeiteten Werkstück weist die Werkstückschulter in einer Vorschubrichtung des Fräswerkzeugs ein offenes Schulterprofil auf, bei dem Werkstückboden und die Schulterfläche an einer Profilkante in eine Werkstückseite übergehen.

Speziell bei der Fräsbearbeitung eines Werkstücks mit sprödem Material, etwa Grauguss, kann es im Bereich der Profilkante zu einem Material-Ausbrechen kommen, sofern sich die Frässchneiden in der Vorschubrichtung der Werkstückseite nähern. Solche Material-Ausbrüche können die Eigenschaften des fräsbearbeiteten Werkstücks, etwa Dichtigkeit, beeinträchtigen.

Um Material-Ausbrüche an der Profilkante zu vermeiden, erfolgt im Stand der Technik die Fräsbearbeitung der Werkstückschulter in mehreren Fräsprozessschritten. Im letzten Fräsprozessschritt wird ein ausreichend geringer Materialabtrag gefräst, um Material-Ausbrüche an der Profilkante zu vermeiden. Eine solche mehrfach durchgeführte Fräsbearbeitung ist jedoch mit hoher Prozessdauer verbunden.

Die Aufgabe der Erfindung besteht darin, eine Prozessanordnung mit einem Fräswerkzeug bereitzustellen, bei dem die Werkstück-Fräsbearbeitung im Vergleich zum Stand der Technik mit reduzierter Prozessdauer sowie unter Vermeidung von Material-Ausbrüchen ermöglicht ist.

Die Aufgabe ist durch die Merkmale des Anspruches 1 gelöst. Bevorzugte Weiterbildungen der Erfindung sind in den Unteransprüchen offenbart.

Die Erfindung geht von einer Prozessanordnung aus, bei der ein Fräswerkzeug eine Werkstückoberfläche bearbeitet. In der Werkstückoberfläche wird eine Werkstückschulter hergestellt. Diese weist einen Werkstückboden auf, der an einer Innenecke in eine davon hochgezogene Schulterfläche übergeht. Im Fräsprozess ist eine Rotationsachse des Fräswerkzeugs rechtwinklig zum Werkstückboden ausgerichtet. Im fertig fräsbearbeiteten Werkstück kann die Werkstückschulter in der Vorschubrichtung des Fräswerkzeugs ein offenes Schulterprofil aufweisen, bei dem der Werkstückboden und die Schulterfläche an einer Profilkante in eine Werkstückseite übergehen. Das Fräswerkzeug zur Fräsbearbeitung des Werkstückbodens weist an seiner Werkzeug-Stirnseite zumindest eine quer zur Rotationsachse verlaufende Bodenfrässchneide auf. Zudem weist das Werkzeug zur Fräsbearbeitung der Werkstückschulter zumindest eine Schulterfrässchneide auf, die entlang der Rotationsachse verläuft.

Um speziell bei sprödem Werkstück-Material an der Profilkante ein Material-Ausbrechen zu vermeiden, sind die folgenden Maßnahmen von Vorteil: So ist die Schulterfrässchneide aufgeteilt in eine Schulterfräs-Hauptschneide und in eine Schulterfräs-Nebenschneide. Die Haupt- und Nebenschneide können voneinander separat jeweils einen ausreichend geringen Materialabtrag an der Werkstückschulter bewirken, wodurch ein Material-Ausbrechen unterbindbar ist.

Hierzu kann sich die Schulterfräs-Nebenschneide von der Werkzeug-Stirnseite über eine Axiallänge bis zu einer Schneidenecke erstrecken. An der Schneidenecke kann im weiteren Verlauf eine sich nach radial innen erstreckende Schneidenflanke anschließen. Diese kann im Fräsprozess im Wesentlichen außer Fräseingriff mit der Schulterfläche sein.

Zudem erstreckt sich die Schulterfräs-Flauptschneide in Richtung Werkzeug-Stirnseite bis zu einer Schneidenecke, die mit Axialabstand zur Werkzeug-Stirnseite angeordnet ist. An diese Schneidenecke schließt sich im weiteren Verlauf in Richtung Werkzeug-Stirnseite eine nach radial innen er streckende Schneidenflanke an.

In der obigen Schneiden-Geometrie ist somit die Schulterfräs-Nebenschneide unmittelbar an der Werkzeug-Stirnseite ausgebildet, während die Schulterfräs-Hauptschneide mit Axialabstand von der Werkzeug-Stirnseite beabstandet ist.

Um ein Material-Ausbrechen zu vermeiden, ist es zudem bevorzugt, wenn die Schulterfräs-Hauptschneide und die Schulterfräs-Nebenschneide in der Werkzeug-Umfangsrichtung um einen Drehwinkel voneinander beabstandet sind. Zudem ist es bevorzugt, wenn die Schulterfräs-Hauptschneide und die Schulterfräs-Nebenschneide in der Axialrichtung nebeneinander, insbesondere mit geringfügiger Überlappung, angeordnet sind, damit diese einen im Wesentlichen glattflächigen Profilverlauf der Schulterfläche erzeugen können. Hierzu ist es von Vorteil, wenn einerseits der Axialabstand der Schulterfräs-Hauptschneide zur Werkzeug-Stirnseite und andererseits die Axiallänge der Schulterfräs-Nebenschneide in etwa gleich groß bemessen sind (gegebenenfalls unter Berücksichtigung eines geringfügigen Überlappmaßes).

In einer bevorzugten Ausführungsvariante ist die Schulterfräs-Nebenschneide nicht separat von der Bodenfrässchneide (das heißt zum Beispiel um einen separaten Drehwinkelversatz davon beabstandet) angeordnet, sondern vielmehr in die Bodenfrässchneide integriert. In diesem Fall kann die an der Werkzeug-Stirnseite quer verlaufende Bodenfrässchneide an einer Schneidenecke unmittelbar in die Schulterfräs-Nebenschneide übergehen. Im Hinblick auf einen glatten Profilverlauf der Schulterfläche ist es von Vorteil, wenn sowohl die Schulterfräs-Hauptschneide als auch die Schulterfräs-Nebenschneide zumindest im Überlappungsbereich auf gleichen Durchmessern liegen.

In einer ersten Ausführungsvariante können sämtliche Frässchneiden des Fräswerkzeugs materialeinheitlich und einstückig durch Schleifbearbeitung im Fräswerkzeug integriert sein. Alternativ dazu können die Frässchneiden auch als separate Schneidelemente ausgebildet sein. Die Schneidelemente können an einem Werkzeug-Grundkörper des Fräswerkzeugs lösbar montiert werden.

Mit dem erfindungsgemäßen Fräswerkzeug wird mit Hilfe der Schulterfräs-Hauptschneide ein erster Materialabtrag durchgeführt, bei dem ein Werkstück-Aufmaß an der Innenecke noch unbearbeitet bleibt. Mittels der Schulterfräs-Nebenschneide erfolgt ein zweiter Materialabtrag, bei dem das Werkstück-Aufmaß an der Innenecke abgetragen wird, wodurch die Werkstückschulter fertigstellbar ist.

Nachfolgend ist ein Ausführungsbeispiel der Erfindung anhand der beigefügten Figuren beschrieben.

Es zeigen:
- Fig. 1: eine Prozessanordnung mit einem Fräswerkzeug und einem Werkstück;
- Fig. 2 und 3: jeweils unterschiedliche Ansichten des Fräswerkzeugs;
- Fig. 4 und 5: jeweils modellhafte Ersatzbilder des Fräswerkzeugs, anhand derer die Wirkungsweise des Fräswerkzeugs veranschaulicht ist;
- Fig. 6 bis 8: in schematischen Ansichten ein Fräswerkzeug gemäß einem zweiten Ausführungsbeispiel;
- Fig. 9: ein weiteres Ausführungsbeispiel des Fräswerkzeugs;
- Fig. 10 und 11: jeweils unterschiedliche Werkstückschulter-Geometrien; und
- Fig. 12: in einer Ansicht entsprechend der Fig. 1 ein nicht von der Erfindung umfasstes Vergleichsbeispiel.

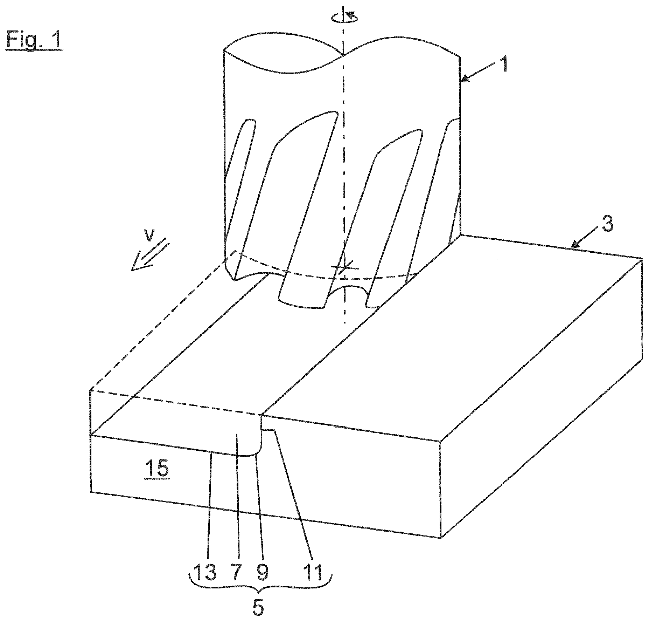

In Figur 1 ist eine Prozessanordnung gezeigt, die aus einem Fräswerkzeug 1 und einem Werkstück 3 besteht. Das noch unbearbeitete Werkstück 3 ist in der Figur 1 quaderförmig ausgebildet. Mit Hilfe des Fräswerkzeugs 1 wird das gestrichelt angedeutete Werkstück-Material durch Fräsbearbeitung abgetragen. Dabei wird an der Werkstückoberfläche eine Werkstückschulter 5 hergestellt. Diese weist einen Werkstückboden 7 auf, der an einer Innenecke 9 in eine davon hochgezogene Schulterfläche 11 übergeht. Während der Fräsbearbeitung ist eine Rotationsachse R des rotierenden Fräswerkzeugs 1 rechtwinklig zum Werkstückboden ausgerichtet. Zudem wird das Fräswerkzeug 1 entlang einer Vorschubrichtung v bewegt. Im fertig fräsbearbeiteten Werkstück 1 weist die Werkstückschulter 5 in der Vorschubrichtung v des Fräswerkzeugs 1 ein offenes Schulterprofil 5, bei dem der Werkstückboden 7 und die Schulterfläche 11 in der Vorschubrichtung v an einer Profilkante 13 in eine Werkstückseite 15 übergehen.

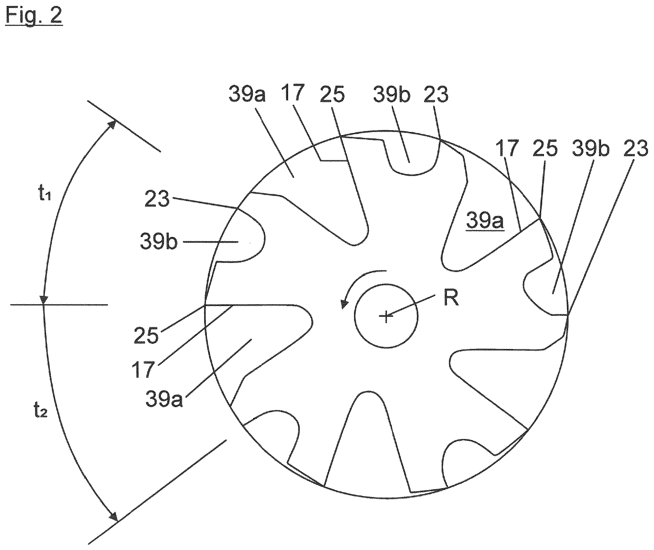

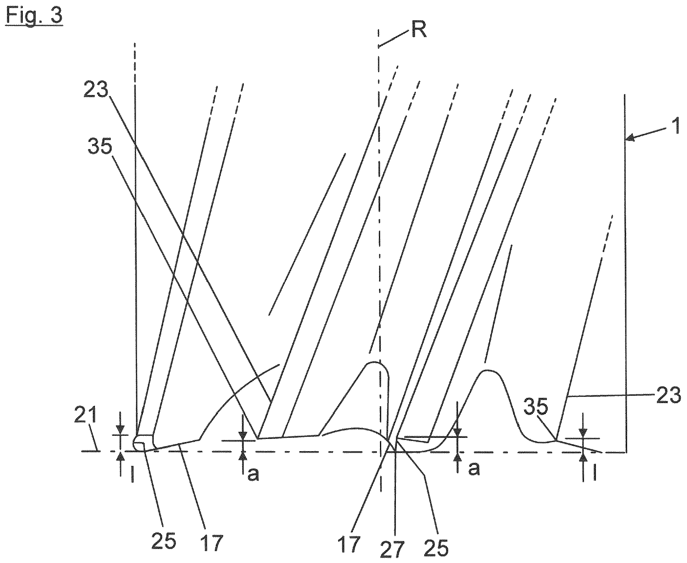

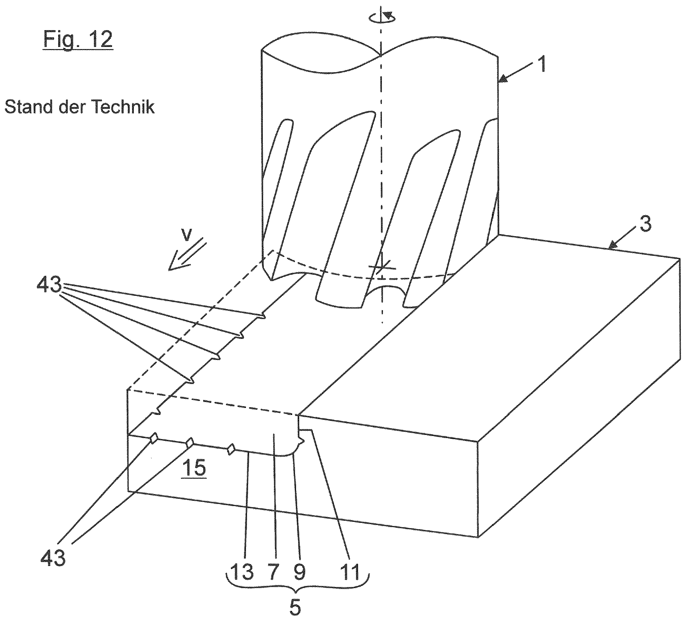

Der Kern der Erfindung besteht in der Geometrie des Fräswerkzeugs 1, die so ausgelegt ist, dass Material-Ausbrüche 43 (Fig. 12) an der Profilkante 13 vermieden werden können. Hierzu sind am Fräswerkzeug 1 die folgenden Maßnahmen verwirklicht: so ist das Fräswerkzeug 1 als Kombinationswerkzeug realisiert, das insgesamt beispielhaft sechs Bodenfrässchneiden 17 sowie sechs Schulterfrässchneiden (23, 25) aufweist. Jede der Bodenfrässchneide 17 verläuft an der Werkzeug-Stirnseite 21 quer zur Rotationsachse R. Demgegenüber verlaufen die Schulterfrässchneiden (23, 25) jeweils entlang der Rotationsachse R. Im Hinblick auf ein Vermeiden von Material-Ausbrüchen 43 (Fig. 12) speziell im Bereich der Innenecke 9 ist in den Figuren 2 und 3 jede der Schulterfrässchneiden (23, 25) aufgeteilt in eine Schulterfräs-Hauptschneide 23 und in eine Schulterfräs-Nebenschneide 25.

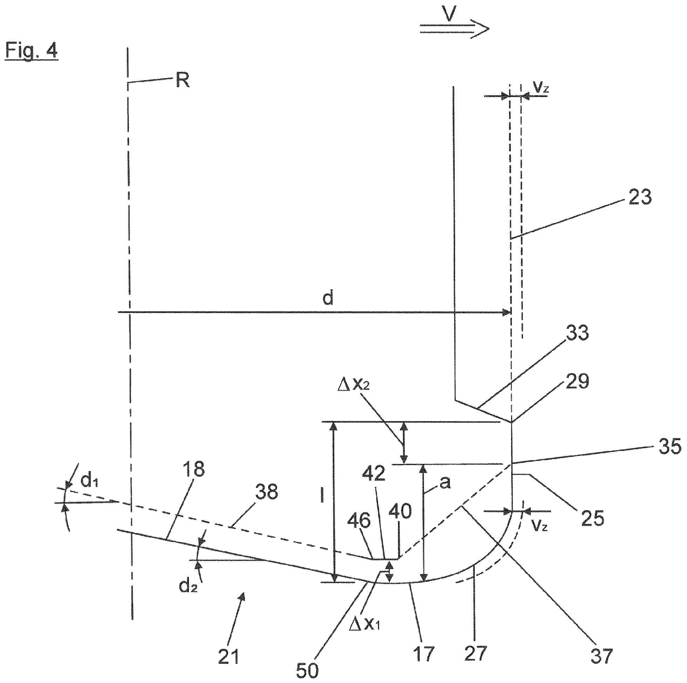

Wie aus der Figur 2 und 3 weiter hervorgeht, geht jede an der Werkzeug-Stirnseite 21 quer verlaufende Bodenfrässchneide 17 an einer Schneidenecke 27 in eine Schulterfräs-Nebenschneide 25 über. Die Schulterfräs-Nebenschneide 25 erstreckt sich von der Werkzeug-Stirnseite 21 über eine Axiallänge l bis zu einer oberen Schneidenecke 29. An der oberen Schneidenecke 29 schließt sich im weiteren Verlauf in Richtung Werkzeug-Spannschaft eine nach radial innen erstreckende Schneidenflanke 33 an. Die Schneidenflanke 33 (Fig. 4) ist im Fräsprozess im Wesentlichen außer Fräseingriff mit der Schulterfläche 11.

Jede der Schulterfräs-Hauptschneiden 23 ist wie folgt realisiert: So erstreckt sich die jeweilige Schulterfräs-Hauptschneide 23 in Richtung Werkzeug-Stirnseite 21 bis zu einer Schneidenecke 35. Diese ist mit Axialabstand a zur Werkzeug-Stirnseite 21 positioniert. An die Schneidenecke 35 schließt sich im weiteren Verlauf eine nach radial innen erstreckende Schneidenflanke 37 an. Diese geht an einer stirnseitigen Schneidenecke 40 in eine stirnseitige Querschneide 42 über. Die stirnseitige Querschneide 42 ist in der Fig. 4 um ein Versatzmaß Δx₁ von der Bodenfrässchneide 17 zurückgesetzt. Die stirnseitige Querschneide 42 der Schulterfräs-Hauptschneide 23 geht nach radial innen an einer radial inneren Schneidenecke 46 in eine Innen-Freiflanke 38 über, die um einen Freiwinkel α₁ von der Werkzeug-Stirnseite 21 zurückgesetzt ist.

Die Bodenfrässchneide 17 geht an einer radial inneren Schneidenecke 50 nach radial innen in eine Innen-Freiflanke 18 über, die um einen Freiwinkel α₂ (Fig. 4) von der Werkzeug-Stirnseite 21 zurückgesetzt ist.

Gemäß der Figur 2 sind die Schulterfräs-Hauptschneiden 23 und die Schulterfräs-Nebenschneiden 25 in der Werkzeug-Umfangsrichtung in variierenden Teilungsabständen t₁, t₂ voneinander beabstandet. Zudem sind die Schulterfräs-Hauptschneiden 23 und die Schulterfräs-Nebenschneiden 25 in Axialrichtung nebeneinander, jedoch mit geringfügiger Überlappung Δx₂ (Fig. 4) angeordnet. Gemäß der Figur 2 ist jeder der Frässchneiden 17, 23, 25 jeweils ein Spanraum 39a, 39b in Drehrichtung vorgelagert. Die Größe der Spanräume 39a, 39b ist in Abhängigkeit von der Schneidenbelastung der zugeordneten Frässchneide 17, 23, 25 ausgelegt. Bei einem reduzierten Spanraum 39b ist der Teilungsabstand t₁ zwischen daran angrenzenden Frässchneiden 17, 23 reduzierbar. Von daher variieren die Teilungsabstände t₁, t₂ zwischen benachbarten Frässchneiden 17, 23 in Abhängigkeit von der Größe des jeweiligen Spanraums 39a, 39b. Dadurch ist zusätzlicher Bauraum für die Anordnung der Frässchneiden 17, 23 bereitstellbar.

In dem Ersatzbild gemäß der Figur 4 sind grob schematisch mit durchgezogener Linie der Konturverlauf einer Bodenfräs-Schneide 17 mit daran anschließender Schulterfräs-Nebenschneide 25 gezeigt. Zudem ist in der Figur 4 mit gestrichelter Linie ein Konturverlauf der Schulterfräs-Hauptschneide 23 überlagert. Wie aus der Figur 4 hervorgeht, liegen die Schulterfräs-Hauptschneide 23 und die Schulterfräs-Nebenschneide 25 auf gleichem Durchmesser d. In der Fig. 4 ist zudem der Zahnvorschub vz pro Umdrehung in Vorschubrichtung v angedeutet, der zum Beispiel bei 0,1 mm liegen kann.

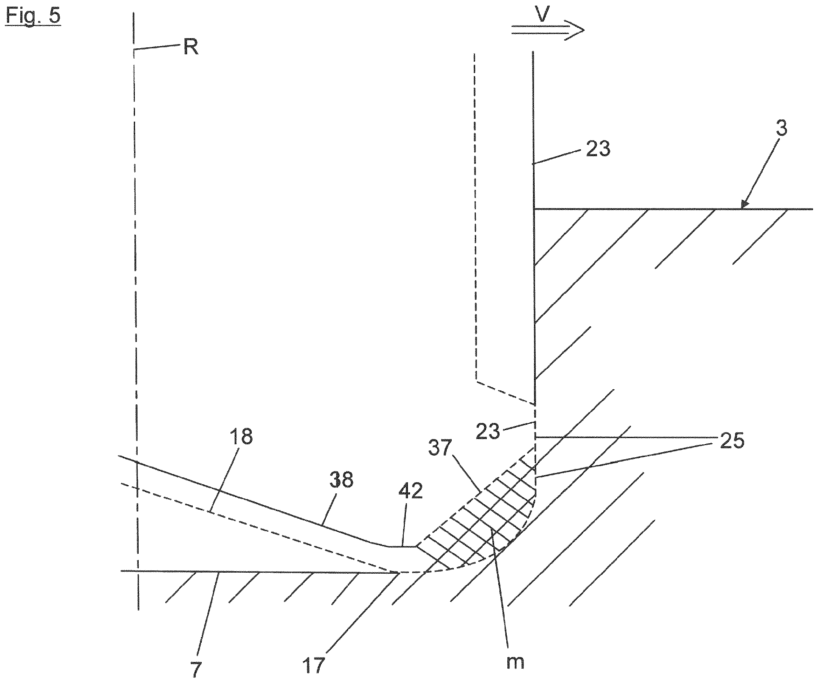

In dem Ersatzbild gemäß der Figur 5 sind der Konturverlauf der Bodenfräs-Schneide 17 mit daran anschließender Schulterfräs-Nebenschneide 25 mit gestrichelter Linie gezeigt. Der Konturverlauf der Schulterfräs-Hauptschneide 23 ist dagegen mit durchgezogener Linie gezeigt.

Nachfolgend wird anhand der Figuren 4 und 5 ein Fräsprozess beschrieben: Demzufolge erfolgt mittels der Schulterfräs-Hauptschneide 23 ein erster Materialabtrag, bei dem ein Werkstück-Aufmaß m an der Innenecke 9 des Werkstückes 3 noch unbearbeitet bleibt. Mittels der Schulterfräs-Nebenschneide 25 erfolgt ein zweiter Materialabtrag, bei dem das Werkstück-Aufmaß m (Fig. 5) an der Innenecke 9 abgetragen wird, und zwar unter Fertigstellung der Werkstückschulter 5.

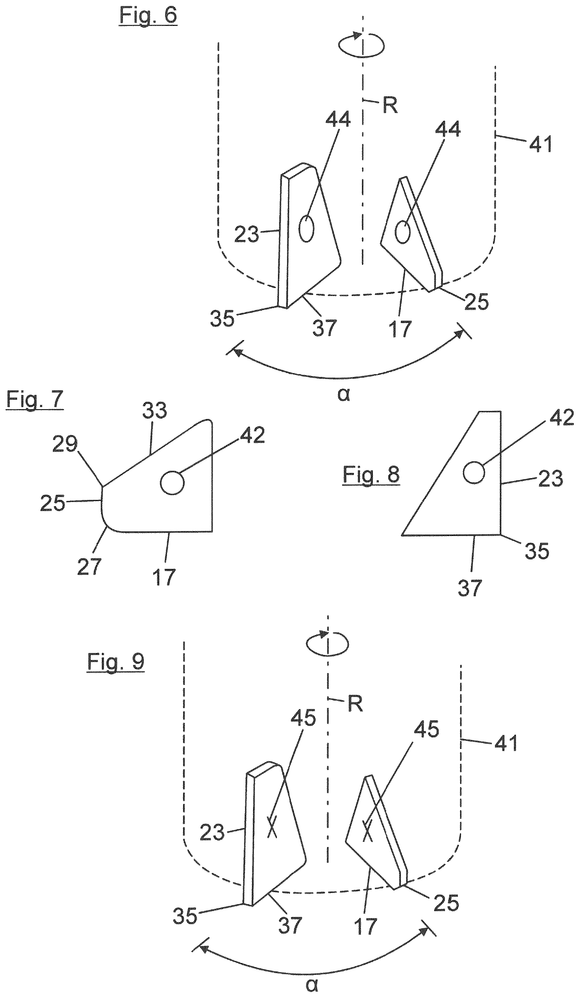

In den Figuren 1 bis 3 ist das Fräswerkzeug 1 als ein geschliffenes Vollmaterial-Bauteil realisiert, bei dem die Frässchneiden 17, 23, 25 materialeinheitlich und einstückig durch Schleifbearbeitung im Fräswerkzeug 1 integriert sind. Alternativ dazu ist in der Figur 6 bis 8 ein Fräswerkzeug 1 gemäß einem zweiten Ausführungsbeispiel angedeutet. In den Figur 6 bis 8 sind die Frässchneiden 17, 23, 25 nicht mehr im Fräswerkzeug materialeinheitlich und einstückig integriert, sondern vielmehr als separate Schneidelemente bereitgestellt. Diese sind an Schraubstellen 44 an einem Werkzeug-Grundkörper 41 des Fräswerkzeugs 1 montiert. In der Fig. 9 ist ein weiteres Ausführungsbeispiel angedeutet, in dem die Frässchneiden 17, 23, 25 als separate Schneidelemente bereitgestellt sind und an Lötstellen 45 mit dem Werkzeug-Grundkörper 41 verlötet sind.

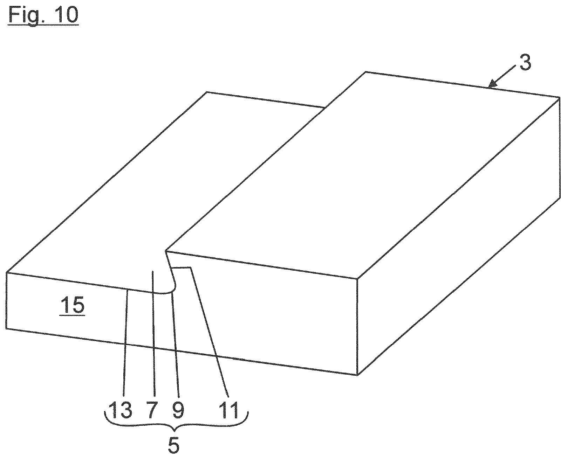

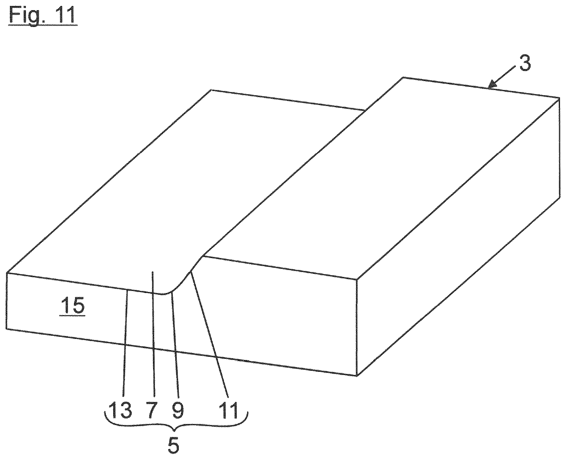

Mit Hilfe des in den Fig. 1 bis 9 dargestellten Fräswerkzeugs wird die in den Fig. 1, 4 und 5 dargestellte Werkstückschulter-Geometrie erzeugt, in der die Schulterfläche 11 rechtwinklig zum Werkstückboden 7 ausgerichtet ist. Die erfindungsgemäße Fräsbearbeitung ist jedoch nicht auf diese spezielle Werkstückschulter-Geometrie beschränkt. Je nach Gestaltung der Bodenfrässchneide 17, der Schulterfräs-Hauptschneide 23 und der Schulterfräs-Nebenschneide 25 sind auch beliebige andere Werkzeugschulter-Geometrien erzeugbar. Beispielhaft ist in der Fig. 10 eine Werkzeugschulter-Geometrie angedeutet, in der zwischen dem Werkstückboden 7 und der Schulterfläche 11 ein spitzer Winkel aufgespannt ist, wodurch sich im Inneneckbereich der Schulter eine Hinterschneidung bildet. Alternativ dazu ist in der Fig. 11 eine Werkstückschulter-Geometrie angedeutet, in der zwischen dem Werkstückboden 7 und der Schulterfläche 11 ein stumpfer Winkel aufgespannt ist.

In der Fig. 12 ist in einer Ansicht entsprechend der Fig. 1 eine Fräsbearbeitung gemäß einem nicht von der Erfindung umfassten Vergleichsbeispiel angedeutet. Demnach wird die Werkstückschulter 5 im Werkstück 3 mit einem herkömmlichen Fräswerkzeug 1' erzeugt. Das Werkstück 3 besteht aus sprödem Material, etwa Grauguss. In der konventionellen Fräsbearbeitung kommt es an den Werkstückkanten zu Material-Ausbrüchen 43, sofern sich die Frässchneiden der Werkstückseite nähern. Die Material-Ausbrüche 43 beeinträchtigen die Eigenschaften des fräsbearbeiteten Werkstücks, etwa die Dichtigkeit an der Werkstück-Oberfläche.

### BEZUGSZEICHENLISTE:

- 1: Fräswerkzeug
- 3: Werkstück
- 5: Werkstückschulter
- 7: Werkstückboden
- 9: Innenecke
- 11: Schulterfläche
- 13: Profilkante
- 15: Werkstückseite
- 17: Bodenfrässchneide
- 18: Innen-Freiflanke der Bodenfrässchneide
- 21: Werkzeug-Stirnseite
- 23: Schulterfräs-Hauptschneide
- 25: Schulterfräs-Nebenschneide
- 27, 29: Schneidenecken der Schulterfräs-Nebenschneide
- 33: Schneidflanke der Schulterfräs-Nebenschneide
- 35: Schneidenecke der Schulterfräs-Hauptschneide
- 37: Schneidenflanke der Schulterfräs-Hauptschneide
- 38: Innen-Freiflanke der Schulterfräs-Hauptschneide
- 39a, 39b: Spanräume
- 40: stirnseitigen Schneidenecke
- 41: Werkzeug-Grundkörper
- 42: stirnseitige Querschneide
- 43: Material-Ausbrüche
- 44: Schraubstellen
- 45: Lötstellen
- 46: radial inneren Schneidenecke
- 50: radial inneren Schneidenecke
- v: Vorschubrichtung
- R: Rotationsachse
- a: Axialabstand
- l: Axiallänge
- Δx₁: Versatzmaß
- Δx₂: Überlappmaß
- d: Durchmesser
- t₁, t₂: Teilungsabstände
- m: Werkstück-Aufmaß
- vz: Zahnvorschub pro Umdrehung
- α₁, α₂: Freiwinkel

## Patentansprüche

1. Fräswerkzeug (1), das in einem Fräsprozess auf einer Werkstückoberfläche zumindest eine Werkstückschulter (5) herstellt, die einen Werkstückboden (7) aufweist, der an einer Innenecke (9) in eine davon hochgezogene Schulterfläche (11) übergeht, wobei im Fräsprozess eine Rotationsachse (R) des Fräswerkzeugs (1) rechtwinklig zum Werkstückboden (7) ausgerichtet ist, wobei zur Fräsbearbeitung des Werkstückbodens (7) das Fräswerkzeug (1) an seiner Werkzeug-Stirnseite (21) zumindest eine quer zur Rotationsachse (R) verlaufende Bodenfrässchneide (17) aufweist, wobei zur Fräsbearbeitung der Werkstück-Schulterfläche (11) das Fräswerkzeug (1) zumindest eine Schulterfrässchneide aufweist, die längs der Rotationsachse (R) verläuft, wobei die Schulterfrässchneide aufgeteilt ist in eine Schulterfräs-Hauptschneide (23) und in eine Schulterfräs-Nebenschneide (25), wobei die Schulterfräs-Hauptschneide (23) sich in Richtung Werkzeug-Stirnseite (21) bis zu einer Schneidenecke (35) erstreckt, die mit Axialabstand (a) zur Werkzeug-Stirnseite (21) angeordnet ist, und wobei an die Schneidenecke (35) der Schulterfräs-Hauptschneide (23) im weiteren Verlauf in Richtung Werkzeug-Stirnseite (21) eine nach radial innen verlaufende Schneidenflanke (37) anschließt, **dadurch gekennzeichnet, dass** die nach radial innen verlaufende Schneidenflanke (37) an einer stirnseitigen Schneidenecke (40) in eine stirnseitige Querschneide (42) übergeht, und dass die stirnseitige Querschneide (42) um ein Versatzmaß (Δx₁) von der Bodenfrässchneide (17) zurückgesetzt ist.

2. Fräswerkzeug nach Anspruch 1, **dadurch gekennzeichnet, dass** die Schulterfräs-Nebenschneide (25) sich von der Werkzeug-Stirnseite (21) über eine Axiallänge (l) bis zu einer Schneidenecke (29) erstreckt, an der sich im weiteren Verlauf in Richtung Werkzeug-Spannschaft eine nach radial innen verlaufende Schneidenflanke (33) anschließt, die im Fräsprozess im Wesentlichen außer Fräseingriff mit der Schulterfläche (11) ist.

3. Fräswerkzeug nach einem der vorhergehenden Ansprüche, **dadurch gekennzeichnet, dass** die Länge der stirnseitigen Querschneide (42) der Schulterfräs-Hauptschneide (23) und die Länge der Bodenfrässchneide (17) zumindest dem Zahnvorschub (vz) pro Werkzeug-Umdrehung entsprechen.

4. Fräswerkzeug nach einem der vorhergehenden Ansprüche, **dadurch gekennzeichnet, dass** die stirnseitige Querschneide (42) der Schulterfräs-Hauptschneide (23) nach radial innen an einer radial inneren Schneidenecke (46) in eine Innen-Freiflanke (38) übergeht, die um einen Freiwinkel (α₁) von der Werkzeug-Stirnseite (21) zurückgesetzt ist.

5. Fräswerkzeug nach einem der Ansprüche 1 bis 4, **dadurch gekennzeichnet, dass** die Schulterfräs-Hauptschneide (23) und die Schulterfräs-Nebenschneide (25) in Werkzeug-Umfangsrichtung um Teilungsabstände (t₁, t₂) beabstandet sind.

6. Fräswerkzeug nach einem der vorhergehenden Ansprüche, **dadurch gekennzeichnet, dass** die Schulterfräs-Hauptschneide (23) und die Schulterfräs-Nebenschneide (25) in Axialrichtung nebeneinander mit geringfügiger Überlappung (Δx₂) angeordnet sind.

7. Fräswerkzeug nach einem der vorhergehenden Ansprüche, **dadurch gekennzeichnet, dass** die an der Werkzeug-Stirnseite (21) querverlaufende Bodenfrässchneide (17) an einer radial äußeren Schneidenecke (27) in die Schulterfräs-Nebenschneide (25) übergeht, und dass die Bodenfrässchneide (17) an einer radial inneren Schneidenecke (50) nach radial innen in eine Innen-Freiflanke (18) übergeht, die um einen Freiwinkel (α₂) von der Werkzeug-Stirnseite (21) zurückgesetzt ist.

8. Fräswerkzeug nach einem der vorhergehenden Ansprüche, **dadurch gekennzeichnet, dass** die Schulterfräs-Hauptschneide (23) und die Schulterfräs-Nebenschneide (25) zumindest im Bereich der Überlappung (Δx₂) auf gleichem Durchmesser (d) liegen.

9. Fräswerkzeug nach einem der vorhergehenden Ansprüche, **dadurch gekennzeichnet, dass** die Frässchneiden (17, 23, 25) materialeinheitlich und einstückig durch Schleifbearbeitung im Vollmaterial des Fräswerkzeugs (1) integriert sind, oder dass die Frässchneiden (17, 23, 25) als separate Schneidelemente ausgebildet sind, die an einem Werkzeug-Grundkörper (41) des Fräswerkzeugs (1) montiert sind.

10. Fräswerkzeug nach einem der vorhergehenden Ansprüche, **dadurch gekennzeichnet, dass** jeder der Frässchneiden (17, 23, 25) jeweils ein Spanraum (39a, 39b) in Drehrichtung vorgelagert ist, und dass die Größe der Spanräume (39a, 39b) in Abhängigkeit von der Schneidenbelastung der zugeordneten Frässchneide (17, 23, 25) unterschiedlich groß ausgelegt ist, und dass bei einem reduzierten Spanraum (39b) ein Teilungsabstand (t₁, t₂) zwischen daran angrenzenden Frässchneiden (17, 23) reduziert ist, so dass die Teilungsabstände (t₁, t₂) zwischen benachbarter Frässchneiden (17, 23) in Abhängigkeit von der Größe des jeweiligen Spanraums (39a, 39b) in Umfangsrichtung variieren, wodurch zusätzlicher Bauraum für die Anordnung weiterer Frässchneiden (17, 23) bereitgestellt ist.

## Claims

1. Milling tool (1) which, in a milling process, produces on a workpiece surface at least one workpiece shoulder (5) that has a workpiece bottom (7) transitioning at an inner corner (9) into a raised shoulder surface (11) thereof, wherein in the milling process a rotation axis (R) of the milling tool (1) is aligned perpendicularly to the workpiece bottom (7), wherein for machining the workpiece bottom (7) by milling, the milling tool (1) has on its tool end side (21) at least one bottom milling cutting edge (17) which extends transversely to the rotation axis (R), wherein for machining the workpiece shoulder surface (11) by milling, the milling tool (1) has at least one shoulder milling cutting edge which runs along the rotation axis (R), wherein the shoulder milling cutting edge is divided into a shoulder milling main cutting edge (23) and a shoulder milling minor cutting edge (25), wherein the shoulder milling main cutting edge (23) extends in the direction of the tool end side (21) to a cutting edge corner (35) which is disposed at an axial spacing (a) from the tool end side (21), and wherein a radially inwardly extending cutting edge flank (37) adjoins the cutting edge corner (35) of the shoulder milling main cutting edge (23) in the further course in the direction of the tool end side (21), **characterized in that** the radially inwardly extending cutting edge flank (37) at a frontal cutting edge corner (40) transitions into a frontal transverse cutting edge (42), and that the frontal transverse cutting edge (42)is recessed from the bottom milling cutting edge (17) by an offset dimension (Δx₁).

2. Milling tool according to Claim 1, **characterized in that** the shoulder milling minor cutting edge (25) extends from the tool end side (21) over an axial length (1) to a cutting edge corner (29), this in the further course in the direction of the tool clamping shank being adjoined by a radially inwardly extending cutting edge flank (33) which in the milling process is substantially disengaged from the shoulder surface (11).

3. Milling tool according to one of the preceding claims, **characterized in that** the length of the frontal transverse cutting edge (42) of the shoulder milling main cutting edge (23) and the length of the bottom milling cutting edge (17) at least correspond to the tooth feed (v_{Z}) per tool revolution.

4. Milling tool according to one of the preceding claims, **characterized in that** the frontal transverse cutting edge (42) of the shoulder milling main cutting edge (23) transitions at a radially inner cutting edge corner (46) radially inwards into an inner free flank (38) which is recessed from the tool end side (21) by a clearance angle (α₁).

5. Milling tool according to one of Claims 1 to 4, **characterized in that** the shoulder milling main cutting edge (23) and the shoulder milling minor cutting edge (25) are spaced apart in the circumferential direction of the tool by pitch distances (t₁, t₂).

6. Milling tool according to one of the preceding claims, **characterized in that** the shoulder milling main cutting edge (23) and the shoulder milling minor cutting edge (25) are disposed next to one another in the axial direction with a slight overlap (Δx₂).

7. Milling tool according to one of the preceding claims, **characterized in that** the bottom milling cutting edge (17) extending transversely on the tool end side (21) transitions at a radially outer cutting edge corner (27) into the shoulder milling minor cutting edge (25), and **in that** the bottom milling cutting edge (17) transitions at a radially inner cutting edge corner (50) radially inwards into an inner free flank (18) which is recessed from the tool end side (21) by a clearance angle (α₂).

8. Milling tool according to one of the preceding claims, **characterized in that** the shoulder milling main cutting edge (23) and the shoulder milling minor cutting edge (25) are on the same diameter (d) at least in the region of the overlap (Δx₂).

9. Milling tool according to one of the preceding claims, **characterized in that** the milling cutting edges (17, 23, 25) are integrated into the solid material of the milling tool (1) in a materially integral manner and in one piece by grinding), or **in that** the milling cutting edges (17, 23, 25) are formed as separate cutting elements which are assembled on a tool main body (41) of the milling tool (1).

10. Milling tool according to one of the preceding claims, **characterized in that** one chip space (39a, 39b) is disposed upstream of each of the milling cutting edges (17, 23, 25) in the direction of rotation, and **in that** the size of the chip spaces (39a, 39b) is designed differently depending on the cutting stress of the assigned milling cutting edge (17, 23, 25), and **in that**, by way of a reduced chip space (39b), a pitch distance (t₁, t₂) between adjacent milling cutting edges (17, 23) is reduced in such a way that the pitch distances (t₁, t₂) between adjacent milling cutting edges (17, 23) vary in the circumferential direction as a function of the size of the respective chip space (39a, 39b), thereby providing additional installation space for disposing further milling cutting edges (17, 23).

## Revendications

1. Outil de fraisage (1) qui, au cours d'un processus de fraisage, réalise sur une surface de pièce au moins un épaulement de pièce (5) qui présente un fond de pièce (7) qui se prolonge au niveau d'un angle intérieur (9) par une surface d'épaulement (11) relevée par rapport à celui-ci, un axe de rotation (R) de l'outil de fraisage (1) étant orienté à angle droit par rapport au fond de pièce (7) au cours du processus de fraisage ; pour le traitement de fraisage du fond de pièce (7), l'outil de fraisage (1) présentant sur son côté frontal d'outil (21) au moins un tranchant de fraisage de fond (17) s'étendant transversalement à l'axe de rotation (R) ; pour le traitement de fraisage de la surface d'épaulement de pièce (11), l'outil de fraisage (1) présentant au moins un tranchant de fraisage d'épaulement qui s'étend le long de l'axe de rotation (R), le tranchant de fraisage d'épaulement étant divisé en un tranchant principal de fraisage d'épaulement (23) et en un tranchant secondaire de fraisage d'épaulement (25), le tranchant principal de fraisage d'épaulement (23) s'étendant en direction du côté frontal d'outil (21) jusqu'à un coin de tranchant (35) qui est agencé à distance axiale (a) du côté frontal d'outil (21), et un flanc de tranchant (37) s'étendant radialement vers l'intérieur se raccordant ensuite au coin de tranchant (35) du tranchant principal de fraisage d'épaulement (23) en direction du côté frontal d'outil (21), **caractérisé en ce que** le flanc de tranchant (37) s'étendant radialement vers l'intérieur se prolonge par un tranchant transversal frontal (42) au niveau d'un coin de tranchant frontal (40), et **en ce que** le tranchant transversal frontal (42) est en retrait d'une mesure de décalage (Δx1) par rapport au tranchant de fraisage de fond (17).

2. Outil de fraisage selon la revendication 1, **caractérisé en ce que** le tranchant secondaire de fraisage d'épaulement (25) s'étend depuis le côté frontal d'outil (21) sur une longueur axiale (1) jusqu'à un coin de tranchant (29), au niveau duquel se raccorde ensuite, en direction de la tige de serrage d'outil, un flanc de tranchant (33) s'étendant radialement vers l'intérieur, qui est essentiellement hors de prise de fraisage avec la surface d'épaulement (11) au cours du processus de fraisage.

3. Outil de fraisage selon l'une quelconque des revendications précédentes, **caractérisé en ce que** la longueur du tranchant transversal frontal (42) du tranchant principal de fraisage d'épaulement (23) et la longueur du tranchant de fraisage de fond (17) correspondent au moins à l'avance par dent (v_{Z}) par tour d'outil.

4. Outil de fraisage selon l'une quelconque des revendications précédentes, **caractérisé en ce que** le tranchant transversal frontal (42) du tranchant principal de fraisage d'épaulement (23) se prolonge radialement vers l'intérieur, au niveau d'un coin de tranchant radialement intérieur (46), par un flanc de dépouille intérieur (38) qui est en retrait d'un angle de dépouille (α₁) par rapport au côté frontal d'outil (21).

5. Outil de fraisage selon l'une quelconque des revendications 1 à 4, **caractérisé en ce que** le tranchant principal de fraisage d'épaulement (23) et le tranchant secondaire de fraisage d'épaulement (25) sont espacés de distances de pas (t₁, t₂) dans la direction circonférentielle de l'outil.

6. Outil de fraisage selon l'une quelconque des revendications précédentes, **caractérisé en ce que** le tranchant principal de fraisage d'épaulement (23) et le tranchant secondaire de fraisage d'épaulement (25) sont agencés côte à côte dans la direction axiale avec un léger chevauchement (Δx₂).

7. Outil de fraisage selon l'une quelconque des revendications précédentes, **caractérisé en ce que** le tranchant de fraisage de fond (17) s'étendant transversalement sur le côté frontal d'outil (21) se prolonge par le tranchant secondaire de fraisage d'épaulement (25) au niveau d'un coin de tranchant radialement extérieur (27), et **en ce que** le tranchant de fraisage de fond (17) se prolonge radialement vers l'intérieur au niveau d'un coin de tranchant radialement intérieur (50) par un flanc de dépouille intérieur (18) qui est en retrait d'un angle de dépouille (α₂) par rapport au côté frontal d'outil (21).

8. Outil de fraisage selon l'une quelconque des revendications précédentes, **caractérisé en ce que** le tranchant principal de fraisage d'épaulement (23) et le tranchant secondaire de fraisage d'épaulement (25) sont au même diamètre (d) au moins dans la zone de chevauchement (Δx₂).

9. Outil de fraisage selon l'une quelconque des revendications précédentes, **caractérisé en ce que** les tranchants de fraisage (17, 23, 25) sont intégrés en une seule matière et en une seule pièce par usinage par meulage dans la matière pleine de l'outil de fraisage (1), ou **en ce que** les tranchants de fraisage (17, 23, 25) sont réalisés sous forme d'éléments de coupe séparés qui sont montés sur un corps de base d'outil (41) de l'outil de fraisage (1).

10. Outil de fraisage selon l'une quelconque des revendications précédentes, **caractérisé en ce que** chacun des tranchants de fraisage (17, 23, 25) est précédé d'un espace de copeaux (39a, 39b) dans la direction de rotation, et **en ce que** la taille des espaces de copeaux (39a, 39b) est conçue de manière différente en fonction de la charge de tranchant du tranchant de fraisage (17, 23, 25) associé, et **en ce que**, dans le cas d'un espace de copeaux réduit (39b), une distance de pas (t₁, t₂) entre des tranchants de fraisage (17, 23) adjacents à celui-ci est réduite, de telle sorte que les distances de pas (t₁, t₂) entre des tranchants de fraisage voisins (17, 23) varient en fonction de la taille de l'espace de copeaux respectif (39a, 39b) dans la direction circonférentielle, ce qui fournit un espace de construction supplémentaire pour l'agencement d'autres tranchants de fraisage (17, 23).
